# EUROPEAN PATENT SPECIFICATION

(11) **EP 3 493 372 B1**
(45) Date of publication and mention of the grant of the patent: **27.10.2021**
(21) Application number: 17833180.7
(22) Date of filing: 20.01.2017
(51) Int. Cl.: H02K 7/116, B60K 6/26, H02K 7/00, H02K 7/11, H02K 7/18, H02K 21/24, B60K 6/38, H02K 1/24, H02K 17/16, H02K 1/27

(54) **INTEGRATED STARTER GENERATOR AND HYBRID POWER SYSTEM**
INTEGRIERTER STARTERGENERATOR UND HYBRIDENERGIESYSTEM
GÉNÉRATEUR-DÉMARREUR INTÉGRÉ ET SYSTÈME D'ALIMENTATION HYBRIDE

(30) Priority: 29.07.2016 CN 201610620592
(43) Date of publication of application: 05.06.2019
(73) Proprietor: Jing-Jin Electric Technologies Co., Ltd, Beijing 100016 (CN)
(72) Inventor: YU, Ping, Beijing 100016 (CN); WANG, Zifu, Beijing 100016 (CN); WANG, Haibin, Beijing 100016 (CN)
(74) Representative: Noréns Patentbyrå AB
(86) International application number: PCT/CN2017/071845
(87) International publication number: WO 2018/018862

(56) References cited:
- WO-A1-02/28674
- CN-A- 103 758 889
- CN-A- 104 325 876
- CN-A- 104 325 876
- CN-A- 106 160 287
- CN-B- 101 006 635
- CN-C- 1 249 879
- CN-U- 205 986 388
- CN-Y- 2 652 701
- DE-A1- 10 042 024
- DE-A1-102009 037 008
- JP-A- S57 119 654
- JP-A- 2000 108 694
- JP-A- 2012 167 627
- JP-A- 2013 067 336
- US-A- 5 097 140
- US-A1- 2015 295 461
- US-B1- 6 561 336
- US-B1- 6 762 523
- Zahra Nasiri-Gheidari ET AL: "A Survey on Axial Flux Induction Motors", PRZEGLAD ELEKTROTECHNICZNY (Electrical Review), ISSN 0033-2097, R. 88 NR 2/2012, 1 February 2012 (2012-02-01), pages 300-305, XP055602746, Retrieved from the Internet: URL:http://www.pe.org.pl/articles/2012/2/7 2.pdf [retrieved on 2019-07-05]

## Description

### TECHNICAL FIELD

The present disclosure relates to a hybrid power system provided with an integrated starter generator, and particularly relates to a mounting structure of the rotor and the stator in a motor.

### BACKGROUND

A motor in which a starter and a generator are integrated is an important component in electrification and hybrid-power oriented solutions for vehicles, which is mainly classified into belt-driven starter generator(BSG) and integrated starter generator(ISG).

An ISG is directly installed at the output end of the crankshaft of an internal combustion engine, which replaces the originally separated internal combustion engine starter and electric generator, and may also serve as an accessory power supply of the vehicle. As an electrification and hybrid-power oriented solution of vehicles, ISGs have the functions of internal combustion engine starting and stopping, electricity generation, braking, power assisting and so on, which facilitates vehicles in saving fuel oil consumption, and reduces the carbon pollution of exhausted gas. Moreover, compared with BSG, ISG does not use a belt, and thus eliminate the trouble in the maintenance of the belt.

In the conventional hybrid power systems that use ISGs, the ISG, the clutch and the driving motor are generally arranged in series in the direction of the transmission shaft, the advantage of which is the simple structure, while the disadvantages are a large axial space occupied, a relatively big mass and a relatively high manufacturing cost.

For example, in the Chinese invention patent "Electromagnetic Jaw Clutch And Double-Motor Hybrid System " (CN103758889A), Fig. 4 of the description discloses a double-motor hybrid system, which comprises an ISG, an electromagnetic jaw clutch and a driving motor, all of which are arranged in series.

Moreover, in the prior art, whenever a hybrid power system of an internal combustion engine and a driving motor is involved, they are usually arranged in series.

For example, in the Chinese invention patent "Rotor Device Of Integrated Stater-Generator Motor And Rotor Working System " (CN101964556B), Fig. 8 of the description discloses a hybrid power system, which comprises an engine, a crankshaft, a rotor device that connects to and rotates together with the crankshaft, a clutch that connects to the rotor device, and a gearbox that connects to the clutch, all of which are sequentially arranged in series.

In the Chinese invention patent "Hybrid Power System " (CN104315090A), Fig. 1 of the description discloses a hybrid power system, which comprises an internal combustion engine as the power supply A, a clutch and a motor as the power supply B, all of which are arranged in series.

In the DE invention patent application " Electrical machine e.g. asynchronous machine for motor vehicle, comprises slotted stator, slotted rotors and stator iron core with an essentially spiral-shaped coil " (DE 100 420 24 A1), Figures1-4 of the description discloses a electrical machine, which comprises a grooved stator and grooved rotors, the stator iron core being one has essentially spiral winding, the axis of which is arranged approximately in the circumferential direction to the stator iron core.

In the US invention patent "friction clutch bearing an electrical machine rotor, in particular for a motor vehicle" (US 6 561 336 B1), Fig.1 of the description discloses a electrical machine, which comprises the axial gap type either induction or permanent magnet type.

In the US invention patent application " ALTERNATOR STARTER " (US 5 097 140A), Figures 1-5 of the description discloses a starter-alternator with an iron-less stator.

In the Chinese invention patent application "Motor and speed changer integrated structure" (CN 104325876 A), Fig.1 of the description discloses clutches nested inside the inner ring of the electric motor for the ICE drive-train of a vehicle.

In the JP invention patent application " DRIVING DEVICE FOR POWER CAR " (JP 2000 108694 A), Figures3,6,7 of the description discloses clutches nested inside the inner ring of the electric motor for the ICE drive-train of a vehicle.

In the WO invention patent application " A HYBRID PROPULSION SYSTEM FOR A MOTOR VEHICLE" (WO 02/28674 A1), Fig.1 of the description discloses clutches nested inside the inner ring of the electric motor for the ICE drive-train of a vehicle.

### SUMMARY

Aiming at the above problems in the prior art, an object of the present disclosure is to provide a hybrid power system provided with an integrated starter generator (ISG).

Another object of the present disclosure is to provide a hybrid power system provided with an integrated starter generator (ISG) in which a clutch is provided, and the axial length of the ISG totally or partially absorbs the axial length of the clutch, thereby saving the space of the system.

In order to achieve the above objects, the present disclosure employs the following technical solutions:
A hybrid power system according to claim 1.

Optionally, magnetic poles of the coil winding are distributed in a circumferential direction of the stator.

Optionally, magnetic poles of the permanent magnets are distributed in a circumferential direction of the rotor.

Optionally, the iron core of the stator is provided with tooth-slots for mounting of the coil winding on a side that faces the rotor, and the coil winding is a concentrated winding or a distributed winding.

Optionally, the iron core of the rotor is provided with tooth-slots for mounting the squirrel-cage conductor on a side that faces the stator, the squirrel-cage conductor is provided with two concentric short circuit rings, which are called an inner ring and an outer ring, and a plurality of conducting bars are evenly distributed between the two short circuit rings.

Optionally, the iron core of the rotor is provided with a plurality of recesses for mounting the permanent magnets on a side that faces the stator, and each of the permanent magnets is of a sector shape.

Optionally, each of the iron core of the rotor and the iron core of the stator is provided with a bed plate, and the bed plate are provided with a mounting hole, and is mounted and fixed by a bolt; and a cooling system in the driving motor also cools the stator.

Optionally, the clutch is an electromagnetic jaw clutch, and a ring-shaped electromagnet or sector-shaped electromagnets are provided surrounding the fixed contrate gear of the clutch.

The integrated starter generator that employs the above structure configuration has the following advantages:
The ISG of the present disclosure is of a hollow ring shape, so the clutch can be arranged at its center.

The rotor and the clutch flywheel of the ISG are integrated, thereby saving the space, the weight and the manufacturing cost.

The present disclosure provides the clutch in the ISG, and the axial length of the ISG totally or partially absorbs the axial length of the clutch, thereby saving the space of the system.

In the present disclosure, because the stator of the ISG is mounted and fixed on a casing of the driving motor, a cooling system in the driving motor can also cool the stator, thereby optimizing the structure of the stator.

The present disclosure arranges the ISG at the output end of the crankshaft of the internal combustion engine and the outer side of the clutch, and has the functions of internal combustion engine starting and stopping, electricity generation, braking, power assisting and so on.

The above description is only an overview of the technical solutions of the present disclosure. In order to understand the technical means of the present disclosure more clearly, and to implement them according to the contents of the description, and in order to make the above and other objects, features and advantages of the present disclosure more fully understood, the particular embodiments of the present disclosure are provided below.

### BRIEF DESCRIPTION OF DRAWINGS

By reading the detailed description of the preferable embodiments below, various other advantages and benefits will become clear to a person skilled in the art. The drawings are only for the purpose of illustrating the preferable embodiments, and are not considered as limitation to the present disclosure. Furthermore, throughout the drawings, the same reference signs denote the same elements. In the drawings:
Fig. 1 is a schematic diagram of an integrated starter generator mounted on an oil electricity hybrid power vehicle;
Fig. 2 is a partial enlarged view of Fig. 1;
Fig. 3 is a perspective view of the first embodiment of the integrated starter generator;
Fig. 4 is an exploded view of the first embodiment of the integrated starter generator;
Fig. 5 is a front view of the stator employed in the first embodiment of the integrated starter generator;

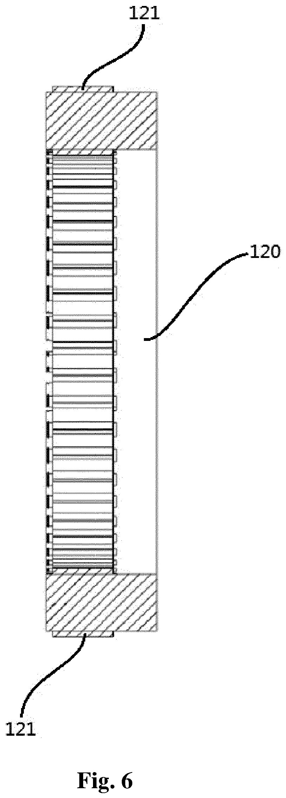

Fig. 6 is a sectional view along the A-A in Fig. 5;

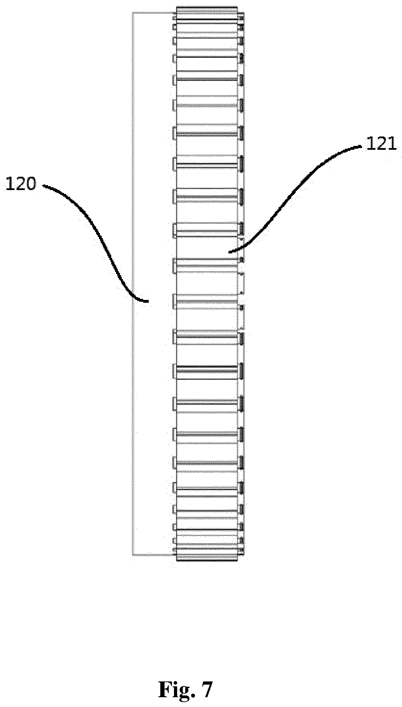

Fig. 7 is a left view of the stator employed in the first embodiment of the integrated starter generator;
Fig. 8 is a front view of the rotor employed in the first embodiment of the integrated starter generator;

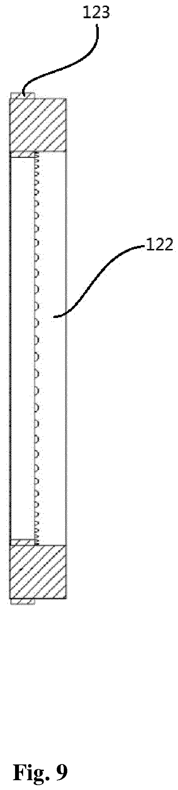

Fig. 9 is a sectional view along the B-B in Fig. 5;

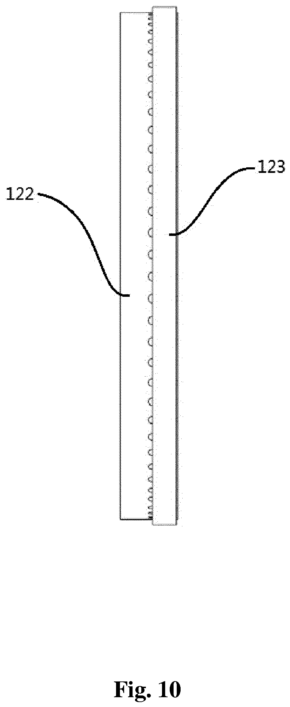

Fig. 10 is a left view of the rotor employed in the first embodiment of the integrated starter generator;
Fig. 11 is a perspective view of the second embodiment of the integrated starter generator; and
Fig. 12 is an exploded view of the second embodiment of the integrated starter generator.

In the drawings: 1. crankshaft output end; 2. fixed contrate gear; 3. rotor; 4. stator; 5. driven shaft; 6. movable contrate gear;
110. internal combustion engine; 111. clutch; 112. driving motor; 113. gearbox; 114. driving shaft; 115. differential; 116. driving wheel; 117. crankshaft;
120. iron core; 1201. tooth-slot; 121. coil winding; 122. iron core; 1221. tooth-slot; 123. squirrel-cage conductor;
130. iron core; 1301. tooth-slot; 131. coil winding; 132. iron core; and 133. permanent magnet.

### DETAILED DESCRIPTION

The exemplary embodiments of the present disclosure will be described in further detail below by referring to the drawings. Although the drawings illustrate the exemplary embodiments of the present disclosure, it should be understood that, the present disclosure can be implemented in various forms, and should not be limited by the embodiments illustrated herein. In contrast, the purpose of providing those embodiments is to more clearly understand the present disclosure, and to completely convey the scope of the present disclosure to a person skilled in the art.

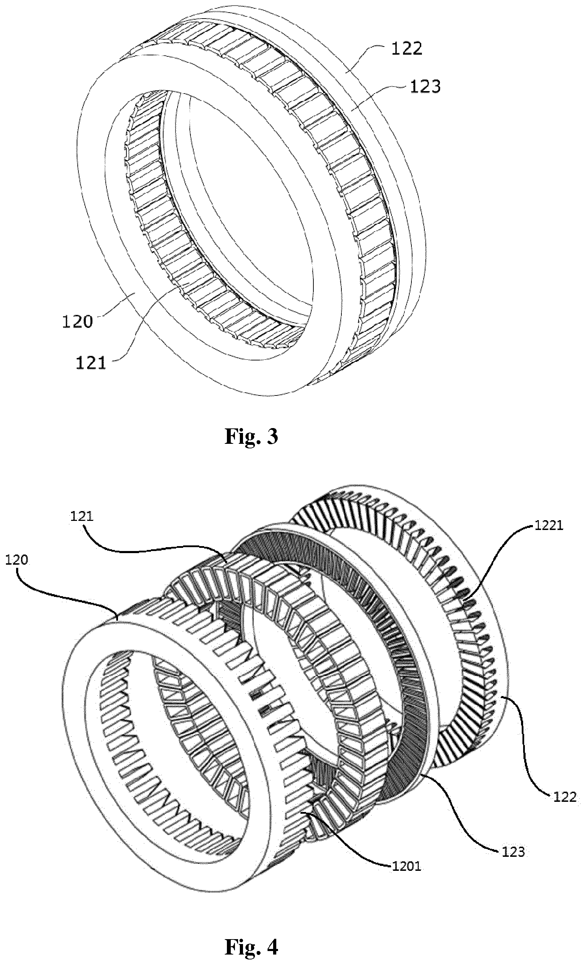

The first embodiment
Figs. 3, 4 and 5 show one of the embodiments of the present disclosure. In the present embodiment, an integrated starter generator (ISG) is provided, comprising a stator and a rotor, wherein the stator and the rotor are provided oppositely, each of the stator and the rotor is provided with a ring-shaped iron core, the iron core 120 of the stator is provided with a coil winding 121 on the side that faces the rotor, and the iron core 122 of the rotor is provided with a squirrel-cage conductor 123 on the side that faces the stator.

In the present embodiment, and the rotor and the stator are spaced by a predetermined distance to form an air gap plane. The air gap plane is perpendicular to the axial direction of the rotor and the stator.

The magnetic poles of the coil winding 121 are distributed in the axial direction of the stator.

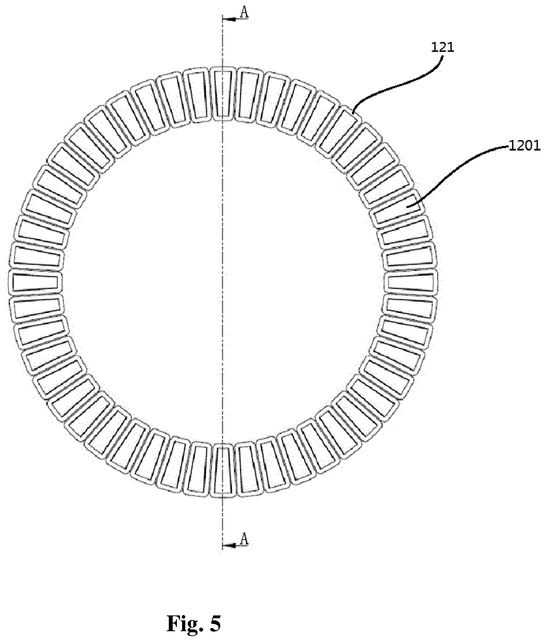

As shown in Figs. 4 and 5, the iron core 120 of the stator is provided with tooth-slots 1201 for mounting the coil winding 121 on the side that faces the rotor, wherein the coil winding 121 is a concentrated winding.

The winding mode of the enameled wire in the stator is fractional slot concentrated winding; that is, the number of slots per pole per phase of the stator is a fraction less than one. The advantage of such a winding is that the size of the end of the winding is relatively small, which saves the consumption of the enameled wire, thereby reducing the cost.

Certainly, the coil winding 121 may also be a distributed winding.

The iron core 122 of the rotor is provided with tooth-slots 1221 for mounting the squirrel-cage conductor 123 on the side that faces the stator.

In order to improve efficiency, the opposing areas of the stator and the rotor are substantially equal.

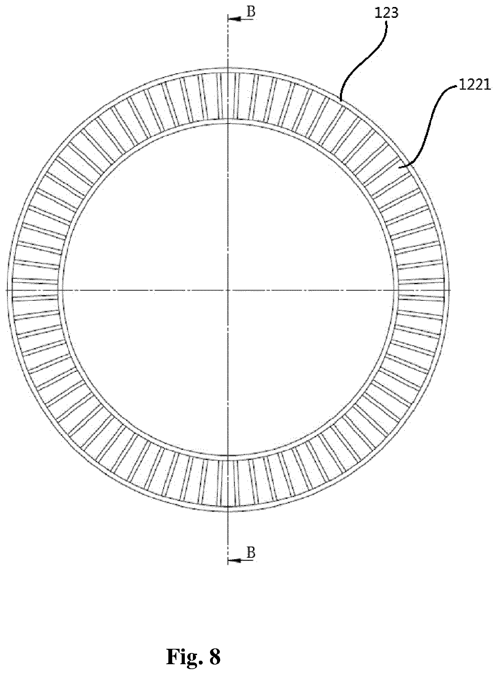

As shown in Figs. 4 and 8, the squirrel-cage conductor 123 is provided with two concentric short circuit rings, which are called an inner ring and an outer ring, and a plurality of conducting bars are evenly distributed between the two short circuit rings. The squirrel-cage conductor of such structure is designed to adapt for the stator whose magnetic poles are distributed in the axial direction.

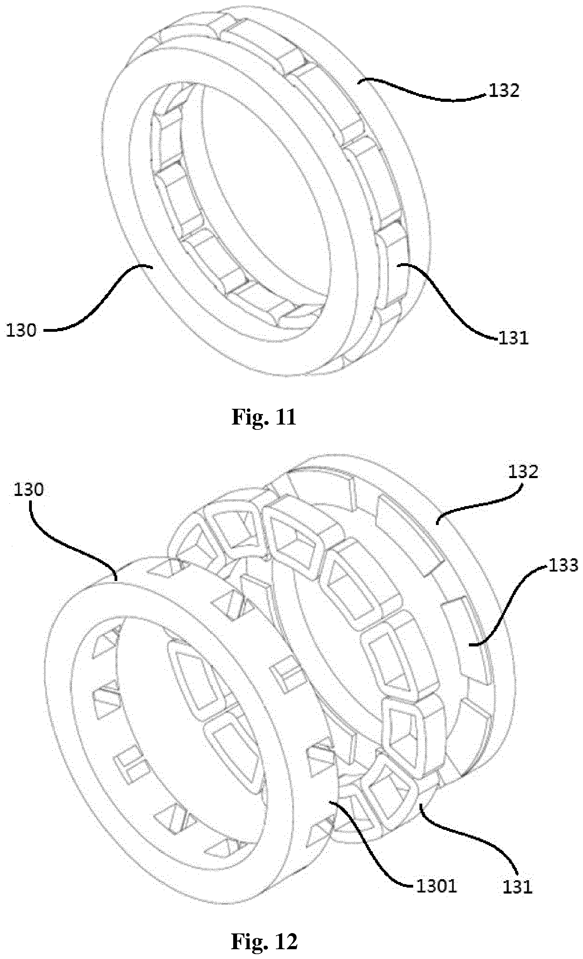

The second embodiment
In the present embodiment, as shown in Figs. 11 and 12, the iron core 132 of the rotor is provided with a plurality of permanent magnets 133 on the side that faces the stator.

The magnetic poles of the permanent magnets 133 are distributed in the axial direction of the rotor.

The permanent magnets, compared with the squirrel-cage conductor, can reduce the rotor loss.

The iron core 132 of the rotor is provided with a plurality of recesses for mounting the permanent magnets 133 on the side that faces the stator, and each of the permanent magnets 133 is of a sector shape.

The stator still employs the structure similar to that of the first embodiment. The iron core 130 of the stator is provided with tooth-slots 1301 for mounting the coil winding 131 on the side that faces the rotor, wherein the coil winding 131 is a concentrated winding.

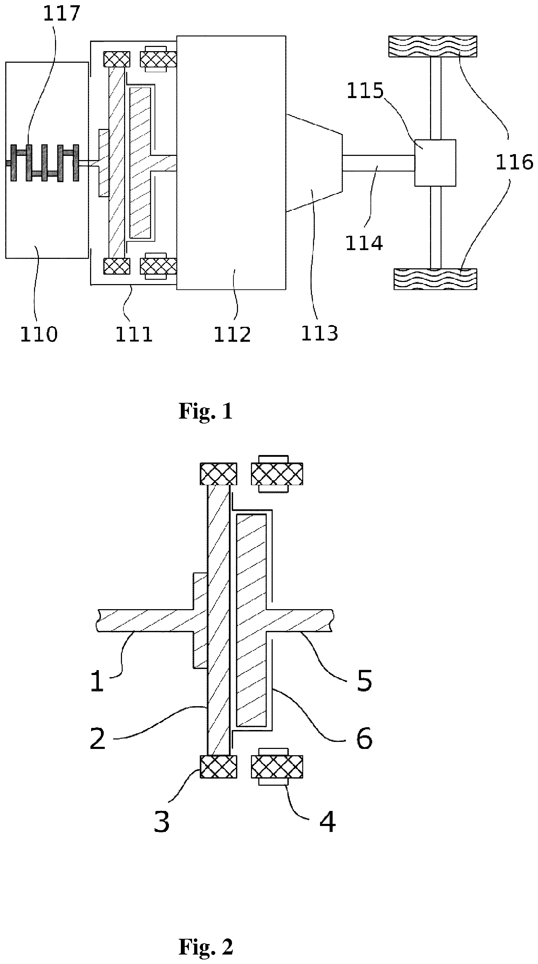

The third embodiment
In the present embodiment, as shown in Figs. 1 and 2, a hybrid power system is provided, which is provided with an internal combustion engine 110 and a driving motor 112, wherein the internal combustion engine 110 connects to a crankshaft 117, the output end of the crankshaft 117 connects to a clutch, the clutch connects to the main shaft of the driving motor 112, the main shaft of the driving motor 112 connects to a gearbox 113, the gearbox 113 connects to a driving shaft 114, the driving shaft 114 connects to a differential 115, and the differential 115 is provided on the main shaft of a driving wheel 116; the clutch comprises a fixed contrate gear 2 and a movable contrate gear 6; and the hybrid power system is further provided with the integrated starter generator, the clutch is nested in the inner ring of the integrated starter generator, and both of the fixed contrate gear 2 and the movable contrate gear 6 are located in the inner ring of the integrated starter generator.

In the present embodiment, the clutch is an electromagnetic jaw clutch, a ring-shaped electromagnet or sector-shaped electromagnets surrounding the fixed contrate gear 2 of the clutch, and correspondingly the movable contrate gear 6 may be provided with an armature.

The integrated starter generator employs the structure of the first embodiment or the second embodiment. The driving motor 112 is the driving motor of the driving shaft 114, and a driven shaft 5 is provided between the main shaft of the driving motor 112 and the clutch.

The rotor 3 of the integrated starter generator is mounted and fixed on the fixed contrate gear 2 of the clutch, and the stator 4 of the integrated starter generator is mounted and fixed on the casing of the driving motor 112.

Because the stator 4 is mounted and fixed on the casing of the driving motor 112, a cooling system in the driving motor 112 can also cool the stator 4, thereby optimizing the structure of the stator.

The rotational speeds of the rotor 3 and of the movable contrate gear 6 are always the same.

The installation of the integrated starter generator is required to satisfy that: during engaging and disengaging between the fixed contrate gear 2 and the movable contrate gear 6 of the clutch, the rotor 3 and the stator 4 have a proper gap therebetween.

In order to install the rotor 3 and the stator 4, such a structure may be employed that, each of the iron core of the rotor 3 and the iron core of the stator 4 is provided with a bed plate, and the bed plate is provided with a mounting hole, and is mounted and fixed by a bolt (not shown).

The bed plate may be an ear plate, which extends toward the inner ring or the outer ring based on the iron core. The bed plate may also be a bezel, which extends toward the inner ring or the outer ring based on the iron core.

Optionally, each of the iron core of the rotor 3 and the iron core of the stator 4 is provided with a plurality of screwed holes, through which fixing bolts are directly mounted on the iron core, and then connect to the movable contrate gear 6 and the casing of the driving motor 112 respectively.

## Claims

1. A hybrid power system, provided with an internal combustion engine (110) and a driving motor (112) having a casing, wherein the internal combustion engine connects to a crankshaft (117), an output end of the crankshaft connects to a clutch (111), the clutch connects to a main shaft of the driving motor, and the clutch comprises an axially movable contrate gear (6) connected to the main shaft of the driving motor (112) and an axially fixed contrate gear (2) connected to the crankshaft (117); **characterized in that** the hybrid power system is further provided with an integrated starter generator of a hollow ring shape, wherein the clutch is arranged at its center; wherein the integrated starter generator, comprising a stator (4) and a rotor (3), the stator and the rotor are provided oppositely in an axial direction of the integrated starter generator, each of the stator and the rotor is provided with a ring-shaped iron core , the iron core (120, 130) of the stator is provided with a coil winding (121, 131) on a side that faces the rotor, the iron core (122, 132) of the rotor is provided with a squirrel-cage conductor (123) or a plurality of permanent magnets (133) on a side that faces the stator, and the rotor and the stator are spaced by a predetermined distance to form an air gap plane that is perpendicular to the axial direction of the rotor (3) and the stator (4); wherein the rotor of the integrated starter generator is mounted and fixed on the peripheral edge of the fixed contrate gear connecting to the crankshaft both as the rotor of the integrated starter generator and a clutch flywheel, and the stator of the integrated starter generator is axially mounted and fixed on the casing of the driving motor.

2. The hybrid power system according to claim 1, **characterized in that**: magnetic poles of the coil winding (121, 131) are distributed in a circumferential direction of the stator.

3. The hybrid power system according to claim 1, **characterized in that**: magnetic poles of the permanent magnets (133) are distributed in a circumferential direction of the rotor.

4. The hybrid power system according to claim 1, **characterized in that**: the iron core (120, 130) of the stator is provided with tooth-slots (1201, 1301) for mounting of the coil winding (121, 131) on a side that faces the rotor (3), and the coil winding (121, 131) is a concentrated winding or a distributed winding.

5. The hybrid power system according to claim 1, **characterized in that**: the iron core (122) of the rotor is provided with tooth-slots (1221) for mounting the squirrel-cage conductor (123) on a side that faces the stator, the squirrel-cage conductor is provided with two concentric short circuit rings, which are called an inner ring and an outer ring, and a plurality of conducting bars are evenly distributed between the two short circuit rings.

6. The hybrid power system according to claim 1, **characterized in that**: the iron core (132) of the rotor (3) is provided with a plurality of recesses for mounting of the permanent magnets (133) on a side that faces the stator (4), and each of the permanent magnets is of a sector shape.

7. The hybrid power system according to any one of claims 1-6, **characterized in that**: each of the iron core (122, 132) of the rotor (3) and the iron core (120, 130) of the stator (4) is provided with a bed plate, and the bed plate is provided with a mounting hole, and is mounted and fixed by a bolt; and a cooling system in the driving motor (112) also cools the stator.

8. The hybrid power system according to any one of claims 1-7, **characterized in that**: the clutch (111) is an electromagnetic jaw clutch, and a ring-shaped electromagnet or sector-shaped electromagnets are provided surrounding the fixed contrate gear (2) of the clutch (111).

## Patentansprüche

1. Hybridantriebssystem, das mit einem Verbrennungsmotor (110) und einem Antriebsmotor (112) mit einem Gehäuse versehen ist, wobei der Verbrennungsmotor mit einer Kurbelwelle (117) verbunden ist, ein Abtriebsende der Kurbelwelle mit einer Kupplung (111) verbunden ist, die Kupplung mit einer Hauptwelle des Antriebsmotors verbunden ist und die Kupplung ein axial bewegbares Kronenrad (6), welches mit der Hauptwelle des Antriebsmotors (112) verbunden ist, und ein axial fixiertes Kronenrad (2), welches mit der Kurbelwelle (117) verbunden ist, umfasst;
**dadurch gekennzeichnet, dass** das Hybridantriebssystem ferner mit einem integrierten Startergenerator in hohlringform, in dessen Mitte die Kupplung angeordnet ist, versehen ist,
wobei der integrierte Startergenerator einen Stator (4) und einen Rotor (3) umfasst, der Stator und der Rotor in einer Axialrichtung des integrierter Startergenerators gegenüberliegend vorgesehen sind, sowohl der Stator als auch der Rotor mit einem ringförmigen Eisenkern versehen sind, der Eisenkern (120, 130) des Stators auf einer dem Rotor zugewandten Seite mit einer Spulenwicklung (121, 131) versehen ist, der Eisenkern (122, 132) des Rotors auf einer dem Stator zugewandten Seite mit einem Kurzschlusskäfigleiter (123) oder einer Vielzahl von Permanentmagneten (133) versehen ist, und der Rotor und der Stator um einen vorbestimmten Abstand beabstandet sind, um eine Luftspaltebene zu bilden, die senkrecht zu der Axialrichtung des Rotors und des Stators ist;
wobei der Rotor des integrierten Startergenerators an dem peripheren Rand des fixierten, mit der Kurbelwelle verbundenen Kronenrads sowohl als Rotor des integrierten Startergenerators als auch als Kupplungsschwungrad montiert und befestigt ist, und der Stator des integrierten Startergenerators axial auf dem Gehäuse des Antriebsmotors montiert und befestigt ist.

2. Hybridantriebssystem nach Anspruch 1, **dadurch gekennzeichnet, dass**:
Magnetpole der Spulenwicklung (121, 131) in einer Umfangsrichtung des Stators verteilt sind.

3. Hybridantriebssystemnach Anspruch 1, **dadurch gekennzeichnet, dass**:
Magnetpole der Permanentmagnete (133) in einer Umfangsrichtung des Rotors verteilt sind.

4. Hybridantriebssystemnach Anspruch 1, **dadurch gekennzeichnet, dass**:
der Eisenkern (120, 130) des Stators mit Zahnschlitzen (1201, 1301) für die Montage der Spulenwicklung (121, 131) auf einer dem Rotor (3) zugewandten Seite versehen ist und die Spulenwicklung (121, 131) eine konzentrierte Wicklung oder eine verteilte Wicklung ist.

5. Hybridantriebssystemnach Anspruch 1, **dadurch gekennzeichnet, dass**:
der Eisenkern (122) des Rotors mit Zahnschlitzen (1221) für die Montage des Kurzschlusskäfigleiters (123) auf einer dem Stator zugewandten Seite versehen ist, der Kurzschlusskäfigleiter mit zwei konzentrischen Kurzschlussringen versehen ist, die als Innenring und Außenring bezeichnet werden, und eine Vielzahl von leitenden Stäben gleichmäßig zwischen den beiden Kurzschlussringen verteilt ist.

6. Hybridantriebssystem nach Anspruch 1, **dadurch gekennzeichnet, dass**:
der Eisenkern (132) des Rotors (3) mit einer Vielzahl von Aussparungen für die Montage der Permanentmagnete (133) auf einer dem Stator (4) zugewandten Seite versehen ist, und jeder der Permanentmagnete eine Sektorform aufweist.

7. Hybridantriebssystem nach einem der Ansprüche 1-6, **dadurch gekennzeichnet, dass**: der sowohl der Eisenkern (122, 132) des Rotors (3) als auch der Eisenkern (120, 130) des Stators (4) jeweils mit einer Grundplatte versehen sind, und die Grundplatte mit einem Montageloch versehen ist und durch einen Bolzen montiert und befestigt ist; und ein Kühlsystem in dem Antriebsmotor (112) auch den Stator kühlt.

8. Hybridantriebssystem nach einem der Ansprüche 1-7, **dadurch gekennzeichnet, dass**: die Kupplung (111) eine elektromagnetische Klauenkupplung ist, und ein ringförmiger Elektromagnet oder sektorförmige Elektromagnete vorgesehen sind, die das fixierte Kronenrad (2) der Kupplung (111) umgeben.

## Revendications

1. Système d'alimentation hybride prévu avec un moteur à combustion interne (110) et un moteur d'entraînement (112) ayant un carter,
dans lequel le moteur à combustion interne se raccorde à un vilebrequin (117), une extrémité de sortie du vilebrequin se raccorde à un embrayage (111), l'embrayage se raccorde à un arbre principal du moteur d'entraînement, et l'embrayage comprend une roue de champ (6) axialement mobile raccordée à l'arbre principal du moteur d'entraînement (112) et une roue de champ (2) axialement fixe raccordée au vilebrequin (117) ; **caractérisé en ce que** le système d'alimentation hybride est en outre prévu avec un générateur-démarreur intégré d'une forme annulaire creuse, dans lequel l'embrayage est agencé au niveau de son centre ;
dans lequel le générateur-démarreur intégré comprend un stator (4) et un rotor (3), le stator et le rotor sont prévus de manière opposée dans une direction axiale du générateur-démarreur intégré, chacun parmi le stator et le rotor est prévu avec un noyau en fer de forme annulaire, le noyau en fer (120, 130) du stator est prévu avec un enroulement de bobinage (121, 131) sur un côté qui fait face au rotor, le noyau en fer (122, 132) du rotor est prévu avec un conducteur à cage d'écureuil (123) ou une pluralité d'aimants permanents (133) sur un côté qui fait face au stator et le rotor et le stator sont espacés selon une distance prédéterminée pour former un plan d'entrefer qui est perpendiculaire à la direction axiale du rotor (3) et du stator (4) ;
dans lequel le rotor du générateur-démarreur intégré est monté et fixé sur le bord périphérique de la roue de champ fixe se raccordant au vilebrequin à la fois comme le rotor du générateur-démarreur intégré et un volant à embrayage, et le stator du générateur-démarreur intégré est axialement monté et fixé sur le carter du moteur d'entraînement.

2. Système d'alimentation hybride selon la revendication 1, **caractérisé en ce que** : des pôles magnétiques de l'enroulement de bobinage (121, 131) sont répartis dans une direction circonférentielle du stator.

3. Système d'alimentation hybride selon la revendication 1, **caractérisé en ce que** : les pôles magnétiques des aimants permanents (133) sont répartis dans une direction circonférentielle du rotor.

4. Système d'alimentation hybride selon la revendication 1, **caractérisé en ce que** : le noyau en fer (120, 130) du stator est prévu avec des fentes de dent (1201, 1301) pour monter l'enroulement de bobinage (121, 131) sur un côté qui fait face au rotor (3), et l'enroulement de bobinage (121, 131) est un enroulement concentré ou un enroulement distribué.

5. Système d'alimentation hybride selon la revendication 1, **caractérisé en ce que** : le noyau en fer (122) du rotor est prévu avec des fentes de dent (1221) pour monter le conducteur à cage d'écureuil (123) sur un côté qui fait face au stator, le conducteur à cage d'écureuil est prévu avec deux bagues de court-circuit concentriques qui sont dénommées bague interne et bague externe, et une pluralité de barres conductrices sont régulièrement réparties entre les deux bagues de court-circuit.

6. Système d'alimentation hybride selon la revendication 1, **caractérisé en ce que** : le noyau en fer (132) du rotor (3) est prévu avec une pluralité d'évidements pour monter les aimants permanents (133) sur un côté qui fait face au stator (4) et chacun des aimants permanents a une forme de secteur.

7. Système d'alimentation hybride selon l'une quelconque des revendications 1 à 6, **caractérisé en ce que** : chacun parmi le noyau en fer (122, 132) du rotor (3) et le noyau en fer (120, 130) du stator (4) est prévu avec une plaque de lit, et la plaque de lit est prévue avec un trou de montage, et est montée et fixée par un boulon ; et un système de refroidissement dans le moteur d'entraînement (112) refroidit également le stator.

8. Système d'alimentation hybride selon l'une quelconque des revendications 1 à 7, **caractérisé en ce que** : l'embrayage (111) est un embrayage électromagnétique à griffes, et un électroaimant de forme annulaire ou des électroaimants en forme de secteur sont prévus en entourant la roue de champ fixe (2) de l'embrayage (111).
